# EUROPEAN PATENT SPECIFICATION

(11) **EP 0 317 241 B1**
(45) Date of publication and mention of the grant of the patent: **30.07.1997**
(21) Application number: 88310733.6
(22) Date of filing: 14.11.1988
(51) Int. Cl.: G06K 15/00

(54) **Printing apparatus**
Druckeinrichtung
Dispositif à imprimer

(30) Priority: 16.11.1987 JP 287264/87
(43) Date of publication of application: 24.05.1989
(73) Proprietor: CANON KABUSHIKI KAISHA, Tokyo (JP)
(72) Inventor: Katayama, Akira, Yokohama-shi Kanagawa-ken (JP); Koizumi, Ryoichi, Yokohama-shi Kanagawa-ken (JP); Kishida, Hideaki, Yamato-shi Kanagawa-ken (JP)
(74) Representative: Beresford, Keith Denis Lewis

(56) References cited:
- FR-A- 2 404 531
- US-A- 4 169 991

## Description

This invention relates to apparatus for printing image data.

Information processing systems, such as computer systems and image processing systems, are widely used and there is a high demand to speed up the operation of various kinds of equipments to be used with such systems. Recording or printing apparatus, as an information output device, in such systems has been improved, and it is possible to drive a printing apparatus at a higher operation speed than an image processing speed and/or information transfer speed of a host device supplying the information to be recorded. In this case, the printing apparatus may be arranged to print intermittently by interrupting the printing until information to be printed is supplied. However, in the case of intermittent operation, stop and start operation of a recording medium conveying system occurs, and there is a problem that overlap or gaps in the recorded image, which should be uniform, arise due to back-lash of gears used in the conveying system and expansion or contraction of the recording medium. These defects are especially serious when making high-density, high-quality image recordings. For example, if there arises a deviation of several hundreds of micrometres in dots (image element) due to above mentioned causes, it would tend to deteriorate the quality of the recorded image significantly if one dot is constituted by about 100 µm.

Patent document US-A-4169991 describes a printing apparatus in which a printing head is moved across a recording medium to form a band or line of an image and the recording medium is advanced in a direction at right angles to the direction of movement of the head after each band is formed ready for the next band to be formed. The speed of the movement of the head along a band or line is controlled at a rate dependent upon the rate of the incoming data.

The present invention relates to line printing, and in particular to an image data printing apparatus comprising: a buffer memory for temporarily storing image data received from a data supplying source; a printing head for receiving image data from the buffer memory and printing such data a line at a time on a recording medium, the printing head being capable of printing the image data at a higher speed than the speed at which the image data is received by the buffer memory; and conveying means for conveying the recording medium past the printing head between the printing of the lines.

In accordance with the present invention, such a printing apparatus is characterised by means for controlling the conveying speed of the recording medium and the timing of line printing by the printing head in accordance with the overall amount of the image data stored in the buffer memory, or in accordance with the speed at which the image data is received by the buffer memory, in order to smooth the conveying of the recording medium past the printing head.

Since the conveying speed of the recording medium is adjusted in response to, for example, the data reception speed it is necessary to interrupt the conveying means less often. Consequently, the defects previously mentioned caused by intermittent conveyance are reduced.

How the invention may be carried out will now be described by way of example only and with reference to the accompanying drawings in which:
Fig. 1 is a block diagram to show an embodiment of a printing or recording apparatus according to the present invention;
Fig. 2 is a block diagram of a conveyor control part of the printing apparatus shown in Fig. 1;
Fig. 3 is a graph showing a relationship between the image data transfer speed and the conveying speed of the recording medium; and
Figs. 4A, 4B and 4C are flow charts showing an example of controlling the conveying speed of the recording medium according to said embodiment.

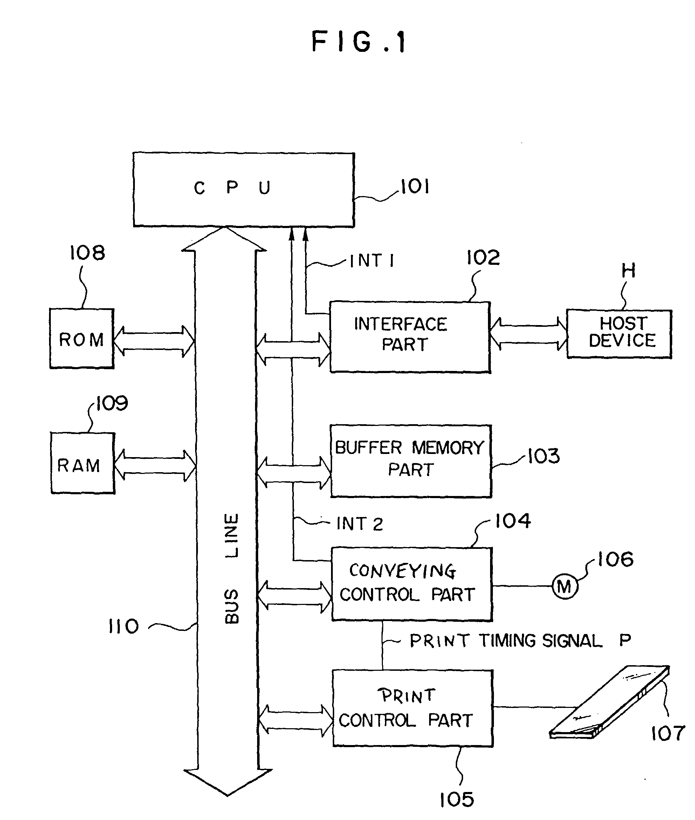

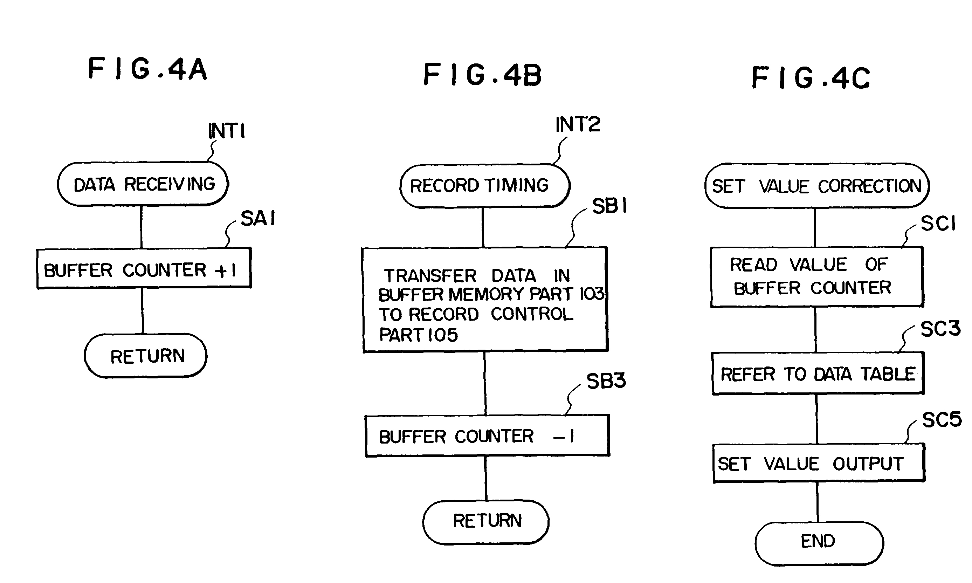

In Fig. 1, a CPU 101 of, for example, microprocessor type controls the apparatus on the basis of the. processing sequences shown in Figs. 4A to 4C. An interface part 102 receives from external host device H and transmits image data relating to printing and control signals and produces a data reception interrupt signal INT1 to CPU 101 in response to the reception of a predetermined amount of image data from the host device H. A buffer memory 105 temporarily contains image data transferred from the host device H. A conveyor control part 104 controls the conveying speed of a recording medium and outputs a synchronising interrupt signal INT2 to the CPU 101 and a print timing signal P to a print control part 105 so that printing can be timed in conformity with conveying speed. A motor 106 for a conveying system is controlled by the conveying control part 104. The motor 106 may be, for example, a DC motor.

The print control part 105 supplies to a print head unit 107 print data sent out from buffer memory part 103 in synchronism with the print timing signal P. The print head unit 107 is a line head for printing on a recording medium a line at a time and may be for example a so-called full line type ink jet print head provided with ink discharge ports corresponding to the whole width of a recording medium or the whole width of a recording region.

A ROM 108 contains a table of data for determining a conveying speed of the record medium corresponding to a transfer speed of image data from the host device H in addition to a program for the CPU 101. A RAM 109 is used for storing, for example, a counter. A bus line 110 provides a control bus, a data bus and an address bus connecting the parts 101-105, 108 and 109.

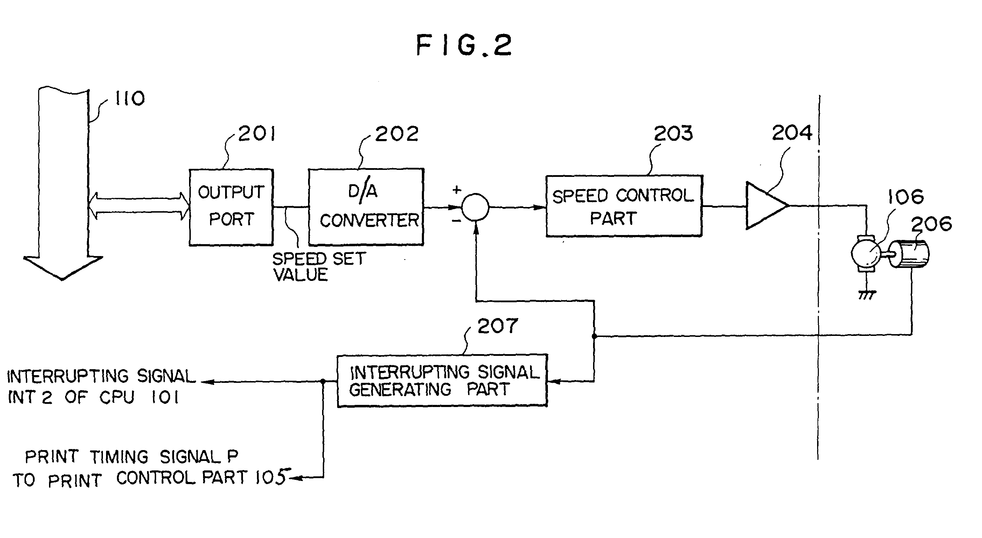

Fig. 2 shows the conveyor control part 104 of Fig.1. An output port 201 outputs a set value of conveyor speed from the CPU 101. A D/A converter 202 converts the output set value, which is digital data, into an analogue value. A speed control part 203 controls the speed of the motor 106 on the basis of the analogue converted set value. An amplifier 204 drives the motor 106 on the basis of the output of the speed control part 203.

An encoder 206 outputs a pulse signal proportional to the speed of rotation of the motor 106, which is fed back to the speed control part 203 and also supplied to an interrupt signal generating part 207. The interrupt signal generating part 207 produces the interrupt signal INT2 to inform the CPU 101 of the print timing and produces the timing signal P which is supplied to the print control part 105, on the basis of the output of the encoder 206.

Image data from the host device H is stored in the buffer memory 103. By identifying the amount of data contained in the buffer memory 103 as a proportion of the capacity of the memory, namely a working or service rate of the buffer memory, it is possible to control the conveyor speed in correspondence with the transfer speed from host device

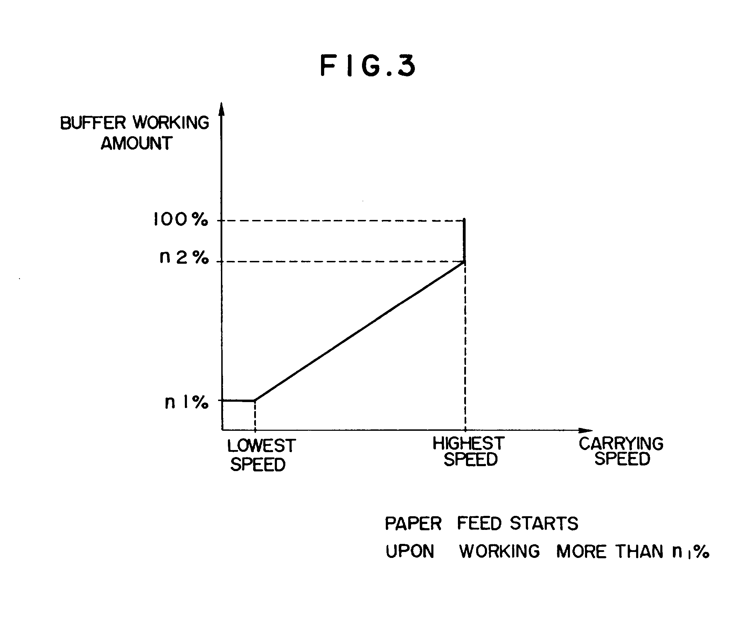

As shown in Fig. 3, the conveyor speed of the recording medium is determined by making it correspond to the working rate of the buffer memory part 103. Specifically, data of the set values for the conveyor control part 104 is placed into a table in the ROM 108 in correspondence with data of the working rates of buffer memory 103. Data showing the working rate is contained in a counter region of the RAM 109, which is called hereafter the buffer counter. The content of the buffer counter is increased or decreased at each time a predetermined amount of data, for example data of one line, is accessed to the buffer memory part 103. In the example shown in Fig. 3, the highest speed of the conveyor system is used when the buffer working rate is more than n2%. A suitable speed is used when the buffer working rate is less than n2% but more than nl%. The conveyor system is stopped when the buffer working rate is less than n1%. It should be noted that 0 < n1% < n2% < 100%.

Figs. 4A, 4B and 4C show examples of print speed control sequences of the present embodiment. Fig. 4A shows a sequence which is initiated by interrupt signal INT1 produced by the interface part 102 in response to the receipt of a predetermined amount of image data from the host device H. At the step SA1, the content of the buffer counter is stepped by +1 and the processing is finished. The interface part 102 can be made to produce signal INT1 upon receipt of data of the amount supplied at one time from the print control part 105, for example, one line.

Fig. 4B shows a sequence initiated in response to an interrupt signal INT2 produced by the conveyor control part 104. In this case, at the step SB1, a predetermined amount of data is transferred from buffer memory part 103 to print control part 105, and at the step SB3, the content of buffer counter is stepped by -1 and the processing is finished.

Fig. 4C shows a sequence for selecting the set value supplied to the conveyor control part 104, the sequence being initiated at an appropriate timing. At the step SC1, the content of the buffer counter is read. At step SC3, the set value corresponding to the read-out buffer counter value is read out from the table in the ROM 108. At step SC5, this set value is sent out to the conveyor control part 104 and the processing is finished. Thus. the conveying speed corresponding to buffer working rate, i.e. transfer speed, is obtained.

According to the above described embodiment, the conveying speed of the printing device is controlled in response to the transfer speed of print information from host device H, so that it is possible to avoid stopping the conveying system during the recording of one contiguous block of information. Therefore, distortion of the image due to for example expansion or contraction of the record medium can be reduced. In case of using an ink jet printing head as the print head unit 107, it is possible to avoid unevenness of discharge of ink due to interruption of recording.

This invention can be effectively and easily applied to other printing devices than ink jet printing heads.

Furthermore, the control of conveying speed can be made not only in response to the working rate of the buffer but also on the basis of the transfer speed itself, and the determination of control data is not limited to the curve shown in Fig. 3.

Moreover, each constitutional part is not limited to the aforementioned equipment. For example, in the above mentioned embodiment a DC motor is used as a driving source of the conveying system. This may be replaced by a pulse motor, and in this case, with respect to the structure in Fig. 2, the D/A converter 202 and closed loop system in speed control part 203 can be eliminated or significantly simplified.

As explained in the foregoing, according to the present invention, the conveying speed is controlled corresponding to the transfer speed of the supplied image information. Thus, interruption of driving of the conveying system is not required in the case that the printing speed exceeds the transfer speed. Therefore distortion or disturbance of the printed image caused by expansion or contraction of the recording medium due to intermittent driving is avoided, which enables a high quality image printing to be obtained.

In the case of forming liquid drops utilising heat energy as disclosed in, for example, U.S. Patent No. 4,723,129 and No. 4,740,796, it is easy to increase the array density of the discharge ports, and it is easy to prepare a compact printing head long enough to cover the total width of recording area. Furthermore, this system is suitable for high speed printing. Consequently, when the present invention is applied to such an ink jet printing head, it is possible to improve further the capacity of this printing head.

## Claims

1. An image data printing apparatus comprising:
a buffer memory (103) for temporarily storing image data received from a data supplying source (H);
a printing head (107) for receiving image data from the buffer memory and printing such data a line at a time on a recording medium, the printing head being capable of printing the image data at a higher speed than the speed at which the image data is received by the buffer memory; and
conveying means (206) for conveying the recording medium past the printing head between the printing of the lines;
characterised by:
means (203, 207) for controlling the conveying speed of the recording medium and the timing of line printing by the printing head in accordance with the overall amount of the image data stored in the buffer memory, or in accordance with the speed at which the image data is received by the buffer memory, in order to smooth the conveying of the recording medium past the printing head.

2. An apparatus according to claim 1, wherein said printing head is an ink jet printing head.

3. An apparatus as according to claim 2, wherein said ink jet printing head is provided with ink discharging ports over the entire width of the printing area.

4. An apparatus according to claim 2 or 3, wherein said head discharges ink by utilizing heat energy.

5. An apparatus according to any previous claim, wherein the conveying means includes a drive motor (106), and the control means is operable to control the speed of rotation of the motor.

## Patentansprüche

1. Bilddaten-Druckeinrichtung mit
einem Pufferspeicher (103) zum zeitweisen Speichern von aus einer Datenzufuhrquelle (H) empfangenen Bilddaten,
einem Druckkopf (107) zum Empfang von Bilddaten aus dem Pufferspeicher und zeilenweisen Drucken derartiger Daten auf einen Aufzeichnungsträger, wobei der Druckkopf die Bilddaten mit einer höheren Geschwindigkeit als der Geschwindigkeit drucken kann, mit der die Bilddaten von dem Pufferspeicher empfangen werden und
einer Fördereinrichtung (206) zur Förderung des Aufzeichnungsträgers zwischen dem Drucken der Zeilen am Druckkopf vorbei,
**gekennzeichnet durch**
eine Einrichtung (203, 207) zur Steuerung der Fördergeschwindigkeit des Aufzeichnungsträgers und den Zeitpunkt des Zeilendruckens durch den Druckkopf entsprechend der Gesamtmenge der in dem Pufferspeicher gespeicherten Bilddaten oder entsprechend der Geschwindigkeit, mit der die Bilddaten vom Pufferspeicher empfangen werden, um die Förderung des Aufzeichnungsträgers am Druckkopf vorbei zu glätten.

2. Einrichtung nach Anspruch 1,
**dadurch gekennzeichnet, daß**
der Druckkopf ein Tintenstrahldruckkopf ist.

3. Einrichtung nach Anspruch 2,
**dadurch gekennzeichnet, daß**
der Tintenstrahldruckkopf über die gesamte Breite des Druckbereichs mit Tintenausstoßöffnungen versehen ist.

4. Einrichtung nach Anspruch 2 oder 3,
**dadurch gekennzeichnet, daß**
der Kopf unter Verwendung von Wärmeenergie Tinte ausstößt.

5. Einrichtung nach einem der vorhergehenden Ansprüche,
**dadurch gekennzeichnet, daß**
die Fördereinrichtung einen Antriebsmotor (106) aufweist und die Steuereinrichtung die Rotationsgeschwindigkeit des Motors steuern kann.

## Revendications

1. Appareil d'impression de données d'image comprenant:
une mémoire tampon (103) pour stocker temporairement des données d'image reçues en provenance d'une source (H) d'alimentation de données;
une tête d'impression (107) pour recevoir des données d'image en provenance de la mémoire tampon et pour imprimer de telles données, une ligne à la fois, sur un support d'enregistrement, la tête d'impression pouvant imprimer les données d'image à une vitesse supérieure à la vitesse à laquelle les données d'image sont reçues par la mémoire tampon; et
un moyen de transport (206) pour transporter le support d'enregistrement devant la tête d'impression entre l'impression des lignes;
caractérisé par:
un moyen (203, 207) pour commander la vitesse de transport du support d'enregistrement et la synchronisation de l'impression des lignes par la tête d'impression en fonction de la quantité totale de données d'image stockées dans la mémoire tampon, ou en fonction de la vitesse à laquelle les données d'image sont reçues par la mémoire tampon, afin de régulariser le transport du support d'enregistrement devant la tête d'impression.

2. Appareil selon la revendication 1, dans lequel ladite tête d'impression est une tête d'impression à jet d'encre.

3. Appareil selon la revendication 2, dans lequel ladite tête d'impression à jet d'encre est pourvue d'orifices de décharge d'encre sur toute la largeur de la zone d'impression.

4. Appareil selon la revendication 2 ou 3, dans lequel ladite tête décharge de l'encre en utilisant de l'énergie thermique.

5. Appareil selon l'une quelconque des revendications précédentes, dans lequel le moyen de transport comporte un moteur d'entraînement (106), et le moyen de commande peut fonctionner pour commander la vitesse de rotation du moteur.
